# EUROPEAN PATENT APPLICATION

(11) **EP 3 975 590 A1**
(43) Date of publication of application: **30.03.2022**
(21) Application number: 21197073.6
(22) Date of filing: 16.09.2021
(51) Int. Cl.: H04W 4/02, G06Q 50/00, H04W 4/21, H04W 4/46

(54) **ASSOCIATION ASSISTANCE APPARATUS**

(30) Priority: 28.09.2020 JP 2020161770
(71) Applicant: MAZDA MOTOR CORPORATION, Hiroshima 730-8670 (JP)
(72) Inventor: Ito, Seiichi, Hiroshima, 730-8670 (JP); Okamura, Masashi, Hiroshima, 730-8670 (JP); Maeda, Takashi, Hiroshima, 730-8670 (JP)
(74) Representative: Behr, Wolfgang

(57) **Abstract**

[Problem] An association assistance apparatus capable of promoting formation of a relationship of association between users of moving objects is provided.

[Means for Solution] An association assistance apparatus 30 for assisting association of a plurality of users is configured to set a moving object 1 which has sent a friendly mode signal as a friendly moving object; when another friendly moving object 1B enters a first range R1 around the friendly moving object, send to the friendly moving object 1 or a portable terminal 20 of a user A of the friendly moving object 1 a greeting display signal for displaying a greeting expression gl; and send to the portable terminal 20 of the user A of the friendly moving object 1 a user list display signal for displaying, of profile information about a user B of a portable terminal 20B of the user B of the other friendly moving object 1B present within a second range R2, only brief profile information, and user list display processing is executed during a period determined to be in a non-riding state in which the user A of the friendly moving object 1 is out of the friendly moving object 1.

## Description

### [Technical Field]

The present invention relates to an association assistance apparatus and particularly relates to an association assistance apparatus for assisting formation of a relationship of association between users of a plurality of moving objects.

### [Background Art]

Conventionally, there has been proposed a system of providing an opportunity for communication between a plurality of vehicles and thereby assisting users of these vehicles to become fellows (see, for example, JP 2014-153347 A). In this system, a vehicle can acquire a position signal of another vehicle via a communication server and display the other vehicle on a map within its display. Then, the user selects the displayed other vehicle, thereby enabling to start communication between both of the vehicles. In this system, by this communication, a predetermined greeting expression is displayed on the display of each of the vehicles, and furthermore, by a further operation performed by each of the users, communication address information is displayed on the display.

### [Summary of Invention]

### [Problem to be Solved by the Invention]

The present inventors have found that there are two types of patterns for a user to enjoy a certain "product." The first pattern is a pattern in which a user repeatedly performs his/her self-improvement for knowledge, skills, and the like relating to a "product" and thereby receives action (that is, stimulation) from the "product", leading to the user's self-growth (hereinafter referred to as an "α cycle"). The second pattern is a pattern in which a user engages with "people" through a "product" and undergoes mutual action through the communication with the "people," leading to the user enjoying group activities (hereinafter referred to as a "β cycle"). It should be noted that the "product" herein is a concept including entities (cameras, vehicles, buildings, scenery, and the like) and non-entities (sports, movies, and the like) and is moreover a concept including presences other than "people."

The α cycle, which greatly promotes the user's self-growth, is a cycle in which the user individually enjoys himself/herself. Accordingly, the user's activities in the α cycle are likely to stay within a small group with similar personal tastes (a small group of homogeneous users) even if the user has a relationship with other "people." On the other hand, the β cycle, which may not greatly promote the user's self-growth, is a cycle that provides mutual action with many other users. Accordingly, the user's activities in the β cycle are not limited to a small group of homogeneous users but are likely to expand to activities in a large group in which various users mix with each other.

When a user who has performed either the α cycle or the β cycle performs the other activity in addition to the one activity, the user can obtain new knowledge and pleasure. Therefore, the present inventors have reached a conclusion that combining the α cycle and the β cycle and promoting the cycling can further enrich the user's pleasure relating to a certain "product" and consequently can enhance his/her quality of life. That is, the increased pleasure further enriches his/her life.

In the system of JP 2014-153347 A, it is possible to perform greetings between vehicles according to intentions of the vehicle users, and further, in line with wishes of both of the users, it is possible to obtain each other's communication address information. However, there is a psychological barrier to giving a greeting to the other user who is not an acquaintance. Furthermore, even if greetings are made, there is a higher psychological barrier to exchange of communication address information. Thus, although this system provides a "chance" for the vehicle users to become fellows by means of the greeting display and the exchange of communication address information, the possibility that the vehicle users actually become fellows is low. That is, in this system, it is difficult to promote the β cycle described above such that the users engage with each other, and thus there is room for improvement.

The present invention has been made to solve the above problem, and an object thereof is to provide a technical solution to support a user in an association assistance apparatus capable of promoting formation of a relationship of association between users of moving objects.

### [Means for Solving the Problem]

To achieve the above object, the present invention is an association assistance apparatus for, using a plurality of moving objects of a plurality of users and a plurality of portable terminals of the plurality of users, assisting association of the plurality of users based on position signals received from the plurality of moving objects and the plurality of portable terminals, and the association assistance apparatus is characterized by being configured to, when receiving from the moving object a friendly mode signal indicating that a user of the moving object has an intention to become a friend with a user of another moving object, execute friendly mode setting processing for setting the moving object which has sent the friendly mode signal as a friendly moving object; when another friendly moving object enters a first range around the friendly moving object, execute greeting processing for sending to at least the friendly moving object or a portable terminal of the user of the friendly moving object a greeting display signal for displaying a greeting expression; and execute user list display processing for detecting a portable terminal of a user of another friendly moving object present within a second range around the portable terminal of the user of the friendly moving object, and sending to the portable terminal of the user of the friendly moving object a user list display signal for displaying, of profile information about the user of the detected other friendly moving object, only brief profile information, wherein the user list display processing is executed during a period determined to be in a non-riding state in which the user of the friendly moving object is out of the friendly moving object.

According to the present invention configured as described above, the user, when riding in the moving object, and out of the moving object, can exert mutual action with the other user who has an intention to become a friend. Furthermore, in the present invention, it is possible to gradually lower the user's psychological barrier to the other user from during riding toward during non-riding. Specifically, during riding, greetings are automatically exchanged between the moving object and the other moving object in response to proximity therebetween. Through such automatic greetings, the user becomes aware that the other user who wishes to have interaction is present in the vicinity, so that the user can lower his/her psychological barrier to exerting further mutual action with the other user. Furthermore, during non-riding, it is possible to individually identify the presence of the other user in the vicinity via the portable terminal using the user list display and notify the user of the fact. Thus, in the present invention, during non-riding, the user knows the presence of the identified other user and the information about the identified other user, so that the user can further lower his/her psychological barrier to the other user, creating positiveness to form a friendship with the other user. Therefore, in the present invention, it is possible to promote formation of a relationship of association between the users of the moving objects by providing a technical solution to support the user.

Furthermore, in the present embodiment, the user list display processing is executed during stopping of the friendly moving object, so that it is possible to prevent the user from operating the portable terminal during traveling, and guide the user to the outside of the friendly moving object during stopping to promote interaction with the other user.

Furthermore, in the present invention, preferably, in the user list display processing, when the portable terminal of the user of the other friendly moving object is detected within a third range narrower than the second range, executed is processing for sending to the portable terminal of the user of the friendly moving object a nearby-user notification signal for highlighting the brief profile information about the user of the other friendly moving object. According to the present invention configured as described above, the user can know that the user is further in proximity to the other user via the portable terminal.

Furthermore, in the present invention, preferably, the association assistance apparatus is configured such that highlighting is performed by differentiating the background color of the information display of the user of the other friendly moving object or adding a mark.

Furthermore, in the present invention, preferably, it is configured to, in the user list display processing, when receiving from the portable terminal of the user of the friendly moving object a nearby-user selection signal identifying the user of the other friendly moving object, further execute profile information display processing for sending to the portable terminal of the user of the friendly moving object a profile information signal for displaying the profile information about the user of the other friendly moving object. According to the present invention configured as described above, the user can view the profile information about the other user in the portable terminal. The user knows more specific information about the other user, so that the user can develop a sense of affinity to the other user and prepare topics when having a conversation with the other user, further creating positiveness to form a friendship with the other user.

Furthermore, in the present invention, preferably, it is configured to, in the user list display processing, when receiving from the portable terminal of the user of the friendly moving object a friend application signal for performing a friend application with respect to the user of the other friendly moving object, further execute friendship establishment processing for enabling access of the portable terminal of the user of the friendly moving object to the profile information about the user of the other friendly moving object. According to the present invention configured as described above, the user becomes a friend with the other user on the virtual space and can freely browse the profile information about the other user from the portable terminal.

Furthermore, in the present invention, preferably, the association assistance apparatus is configured to refer to a profile exchange approval setting included in user data of another user who is a target of the friend application signal.

Furthermore, in the present invention, preferably, the association assistance apparatus is configured such that, in the case, if the profile exchange approval setting of the other user is set to automatically approve a friend application, the friendship establishment processing is performed, and in the case the profile exchange approval setting of the other user is set to refuse a friend application, the friendship establishment processing is not performed.

Furthermore, in the present invention, preferably, it is configured to, in the user list display processing, further execute proximity notification processing for sending to the portable terminal of the user of the friendly moving object a notification signal for notifying of proximity of the portable terminal of the user of the other friendly moving object according to a distance between the portable terminal of the user of the friendly moving object and the portable terminal of the user of the other friendly moving object. According to the present invention configured as described above, the user can meet the other user in the real space with the aid of the notification using the portable terminal.

Furthermore, in the present invention, preferably, the association assistance apparatus is configured such that the portable terminal of the user notifies by generating sound or vibration that the portable terminal of the user and the portable terminal of another user are in proximity to each other, based on the received notification signal.

Furthermore, in the present invention, preferably, the association assistance apparatus is configured such that the portable terminal of the user operates to generate a big sound as a distance to the portable terminal of the other user is short.
Furthermore, in the present invention, preferably, the association assistance apparatus is configured such that a peer-to-peer mutual direct wireless connection is established between the portable terminal of the user and the portable terminal of the other user which are in a nearby state, to execute proximity notification processing.

Furthermore, in the present invention, preferably, it is configured to, in the user list display processing, send to the portable terminal of the user of the friendly moving object an additional signal for displaying, of the users of the detected other friendly moving objects, a user of a friendly moving object which is a target of the greeting processing, in a different manner from a user of a friendly moving object which is not a target of the greeting processing. According to the present invention configured as described above, it is possible to encourage the user to develop a sense of affinity to the other user with whom a greeting has already been made.

Furthermore, in the present invention, preferably, the association assistance apparatus is configured to add greeting mark to a user in which the greeting processing has been executed

Furthermore, in the present invention, preferably, the different manner is a different background color or addition of a different graphic expression.

Furthermore, in the present invention, preferably, the period determined to be in the non-riding state is a period in which a power source of the friendly moving object is stopped, a period in which the portable terminal of the user of the friendly moving object is away from the friendly moving object by a predetermined distance, or a period in which a parking brake of the friendly moving object is turned on. Furthermore, in the present invention, preferably, provided is a memory that stores the profile information about the plurality of users.

Furthermore, in the present invention, preferably, the association assistance apparatus is configured such that within a predetermined time from when the greeting processing is executed by the friendly moving object with respect to the other friendly moving object, the friendly moving object does not execute the greeting processing with respect to the other friendly moving object.

According to another aspect of the present invention, an association assistance system is provided including an association assistance apparatus according to any of claims 1 to 14 and a moving object.

Furthermore, in the present invention, preferably, the moving object is a vehicle.

Furthermore, in the present invention, preferably, the moving object is a car, a bus, a motorbike, a motor scooter, a vessel, or an aircraft.

### [Advantageous Effect of Invention]

According to the present invention, it is possible to provide the association assistance apparatus capable of promoting formation of a relationship of association between users of moving objects.

### [Brief Description of Drawings]

FIG. 1 is a configuration view of an association assistance system according to an embodiment of the present invention.
FIG. 2 is a processing flow of association assistance processing according to the embodiment of the present invention.
FIG. 3 is a processing flow of greeting processing according to the embodiment of the present invention.
FIG. 4 is an explanatory view of the greeting processing according to the embodiment of the present invention.
FIG. 5 is a processing flow of meeting processing (user list display processing) according to the embodiment of the present invention.
FIG. 6 is an explanatory view of the user list display processing according to the embodiment of the present invention.
FIG. 7 is a processing flow of meeting processing (interaction promotion processing) according to the embodiment of the present invention.
FIG. 8 is an explanatory view of the interaction promotion processing according to the embodiment of the present invention.

### [Mode for Carrying Out the Invention]

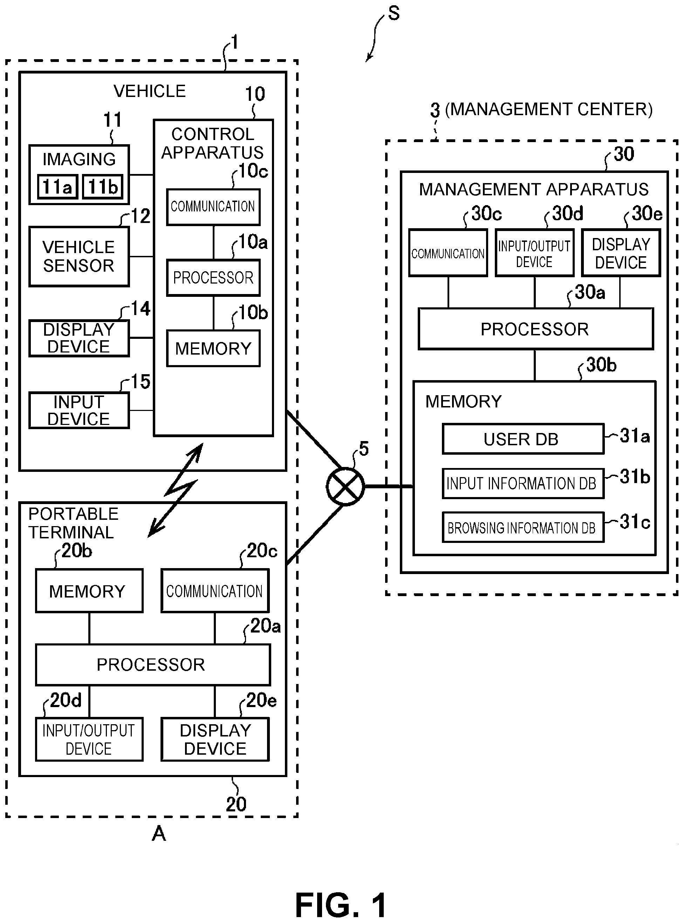

Hereinafter, an association assistance system according to an embodiment of the present invention will be described with reference to the attached drawings. First, a schematic configuration of the association assistance system will be described with reference to FIG. 1. FIG. 1 is a configuration view of the association assistance system.

An association assistance system S of the present embodiment assists formation of a relationship of association between a plurality of users having a vehicle 1 which is a moving object and a portable terminal 20. In the present embodiment, when a user A goes out for a drive in the vehicle 1, in the case where the user A has an intention to associate with another user B, his/her psychological barrier to the other user B is lowered to create a sense of fellowship, making it easier to form a relationship of association.

As illustrated in FIG. 1, the association assistance system S of the present embodiment includes a control apparatus 10 of the vehicle 1 possessed by the user A, the portable terminal 20 possessed by the user A, and a management apparatus (server apparatus) 30 of a management center 3, and these are configured to be capable of wirelessly communicating with each other. The control apparatus 10 and the portable terminal 20, and the management apparatus 30 are capable of wirelessly communicating with each other via a communication line (Internet line) 5. The control apparatus 10 and the portable terminal 20 are capable of communicating with each other using a near field communication technology (for example, Bluetooth (registered trademark)). Furthermore, in the association assistance system S, vehicles 1B and portable terminals 20B which are possessed by a plurality of the other users B (for example, B1, B2, and B3) are also connected to the management apparatus 30 so as to be capable of wirelessly communicating therewith. Although the user A will be representative of a plurality of users in the following description, this description applies to the other users B.

The control apparatus 10 is a computer apparatus including a processor 10a, a memory 10b, a communication circuit 10c, and the like, and is configured to perform processing by the processor 10a executing various programs stored in the memory 10b. The control apparatus 10 is connected to an imaging device 11, a sensor device 12, a display device 14, and an input device 15 which are mounted on the vehicle 1. The processor 10a stores in the memory 10b image data received from the imaging device 11, measurement data received from the sensor device 12, and input data received from the input device 15. Furthermore, the processor 10a repeatedly sends the image data, the measurement data, the input data, and these processing data to the management apparatus 30 via the communication circuit 10c. Furthermore, the processor 10a is programmed so as to execute predetermined processing based on a control signal received from the management apparatus 30.

The imaging device 11 is a video camera, and includes an in-vehicle camera 11a that captures an image of a driver (user A) and a passenger, and an out-of-vehicle camera 11b that captures an image of the outside of the vehicle 1. The out-of-vehicle camera 11b includes a plurality of video cameras that capture images of the front side, rear side, right side, and left side of the vehicle 1.

The sensor device 12 includes a vehicle sensor that measures a vehicle state, and a biological sensor that acquires occupant's biological information. The vehicle sensor includes a positioning device that measures a current position (position information) of the vehicle 1 on the earth (for example, a global positioning system (GPS) or a gyro sensor is used), a vehicle speed sensor, an acceleration sensor, a steering angle sensor, a yaw rate sensor, and other sensors.

Furthermore, the biological sensor includes an in-vehicle microphone that records conversation made in the vehicle, a heart rate measurement device that measures heart rate variability of the driver, and the like. Furthermore, the control apparatus 10 can also use the in-vehicle camera 11a as a biological sensor. For example, the control apparatus 10 can acquire an expression, a lineof-sight direction, a blink, and the like of the driver or the passenger, from image data captured by the in-vehicle camera 11a.

The display device 14 is, for example, a liquid crystal display, and can display a map, various traffic information, and the like. It should be noted that the portable terminal 20 may be used as a display device by connecting the portable terminal 20 to the control apparatus 10 in a wireless or wired manner.

The input device 15 is an input device including a touch input screen, a switch, a button, and the like, and the driver can input various information using the input device 15. The display device 14 may be used as a touch input screen. When the driver encounters a favorable scenery or sightseeing spot while driving, the driver, using the input device 15, can input a recommendation signal (high evaluation signal) for recommending these.

Furthermore, the driver can manually turn on and off a friendly mode of the vehicle 1 using the input device 15. The friendly mode being on indicates that, during a drive, the user A of the vehicle 1 is in a state of having an intention to become a friend with the other user B (or an intention to have interaction). When the friendly mode is turned on, data sent from the control apparatus 10 to the management apparatus 30 includes a friendly mode signal.

Furthermore, alternatively, when the user A sets a drive route of the vehicle 1 using the input device 15 or the portable terminal 20, the control apparatus 10 may automatically turn on the friendly mode. Furthermore, alternatively, when the drive ends (for example, when the vehicle 1 returns to a predetermined location), the control apparatus 10 may automatically turn off the friendly mode.

The control apparatus 10 stores in the memory 10b the image data, the measurement data (including a position signal, an IG state signal, and the like), the input data, and the processing data and sends these data at any time to the management apparatus 30 together with a vehicle identification number identifying the vehicle 1. The position signal indicates a current position of the vehicle 1. The IG state signal indicates whether an IG signal is on or off, and an engine of the vehicle 1 when the IG signal is on is in operation.

It should be noted that the control apparatus 10 may perform user authentication when the user A uses the association assistance system S via the vehicle 1. For example, the control apparatus 10 may perform the user authentication (image authentication) using image data captured by the camera 11a. Furthermore, the control apparatus 10 may perform the user authentication using linking of the portable terminal 20 as a registered apparatus to the control apparatus 10 through a near field communication line. In this case, the portable terminal 20 is registered in advance in the control apparatus 10. In this user authentication, it is determined from the above linking that the authorized user A is riding in the vehicle 1.

The portable terminal 20 is a portable computer apparatus including a processor 20a, a memory 20b, a communication circuit 20c, an input/output device 20d, a display device 20e, and the like. The portable terminal 20 is configured to perform various processing by the processor 20a executing various programs stored in the memory 20b. Furthermore, the processor 20a sends and receives various data to and from the management apparatus 30 and the control apparatus 10 via the communication circuit 20c.

The portable terminal 20 acquires, using a positioning program, a current position based on communication with a surrounding communication station or based on satellite positioning with a GPS. The portable terminal 20 repeatedly sends to the management apparatus 30 a position signal indicating the acquired current position, a portable terminal identification number identifying the portable terminal 20, and other data.

The user A can access a website using a browser program (browser application) of the portable terminal 20. For example, the user A can access a database provided by the management apparatus 30 using the portable terminal 20 to browse various information.

Furthermore, using a friend formation program (friend formation application) of the portable terminal 20, the user A can cause the display device 20e to display various data received from the management apparatus 30, and send to the management apparatus 30 predetermined data input via the input/output device 20d.

Furthermore, the portable terminal 20 can be automatically linked to the control apparatus 10 using a near field communication technology. When the portable terminal 20 is a communication apparatus registered in advance, the control apparatus 10 authenticates the portable terminal 20 and automatically establishes a communication line. At this time, the control apparatus 10 can receive the portable terminal identification number from the portable terminal 20 and add the portable terminal identification number to data to be sent to the management apparatus 30.

The management apparatus 30 is a computer apparatus (server apparatus) including a processor 30a, a memory 30b, a communication circuit 30c, an input/output device 30d, a display device 30e, and the like, and is configured to perform various processing by the processor 30a executing programs stored in the memory 30b. The memory 30b stores various databases in addition to the programs.

The databases include a user database 31a, an input information database 31b, a browsing information database 31c, and the like. The user can browse these databases using a browser program of the portable terminal 20.

The user database 31a stores user data on the user A. The user data includes data that can be registered and updated by the user (profile information and the like), and data automatically allocated by the management apparatus 30 at the time of user registration (a user identification number and the like). The user A can make the user registration in the management apparatus 30 using the portable terminal 20.

The user data includes, regarding the user A, a user identification number, a vehicle identification number, a portable terminal identification number, profile information, My List information, Friend information, setting information (a profile exchange approval setting and the like), and status information (the total number of greetings, a friendly mode flag, and the like). The user identification number is an identification number identifying each user. The vehicle identification number is an identification number identifying the vehicle 1 of the user A. The portable terminal identification number is an identification number identifying the portable terminal 20 of the user A.

The profile information is personal information about the user A, and includes, regarding the user A, a handle, favorite spot information (a name and a thumbnail image), hobbies, self-introduction, and an updatable diary. A part of the profile information is brief profile information, and the brief profile information includes the handle and the favorite spot information.

The My List information is registration information about a favorite spot of the other user B acquired from the other user B. The Friend information is information about the other user B who is a friend, and includes a Friend identification number given to each of the other users B who are friends, a user identification number of the other user B, profile information about the other user B, and the like. Upon approval of a friend application between the user A and the other user B, the user A becomes a "friend" with the other user B on the virtual space.

The profile exchange approval setting is information for setting whether to, when the user A receives a friend application from the other user B, automatically approve or refuse the friend application. The total number of greetings is the total number of times of receiving greetings from the other vehicles 1B by greeting processing during a drive in the vehicle 1. The friendly mode flag is a flag which is turned on by receiving the friendly mode signal from the vehicle 1 in which the friendly mode is turned on. That is, the management apparatus 30, when receiving the friendly mode signal from the vehicle 1, sets the vehicle 1 to a "friendly vehicle (or a friendly moving object)." In other words, the management apparatus 30, when receiving the friendly mode signal from the vehicle 1, turns on the friendly mode flag of the vehicle 1.

The input information database 31b is a database that stores the image data, the measurement data, the input data, and the like which are received from the vehicle 1 of the user A, map data, external traffic information, and the like. The browsing information database 31c is a database that stores data created by the management apparatus 30 processing data in the input information database 31b. The browsing information database 31c includes a content database, and a route and spot score database.

The content database includes traveling log data, edited video data, and the like. The traveling log data is log data on a drive performed by the user A. The management apparatus 30 generates new traveling log data each time the user performs a drive (that is, when the friendly mode flag becomes on). Specifically, during a period from when the friendly mode flag of the vehicle 1 becomes on to when the friendly mode flag of the vehicle 1 becomes off, various data is accumulated as the traveling log data for the drive. The traveling log data includes a unique drive identification number, the vehicle identification number identifying the vehicle 1, position information about the vehicle 1, position information about the portable terminal 20, IG on/off information, the number of greetings, and a user identification number (and/or a vehicle identification number) of the other user with whom greetings have been exchanged.

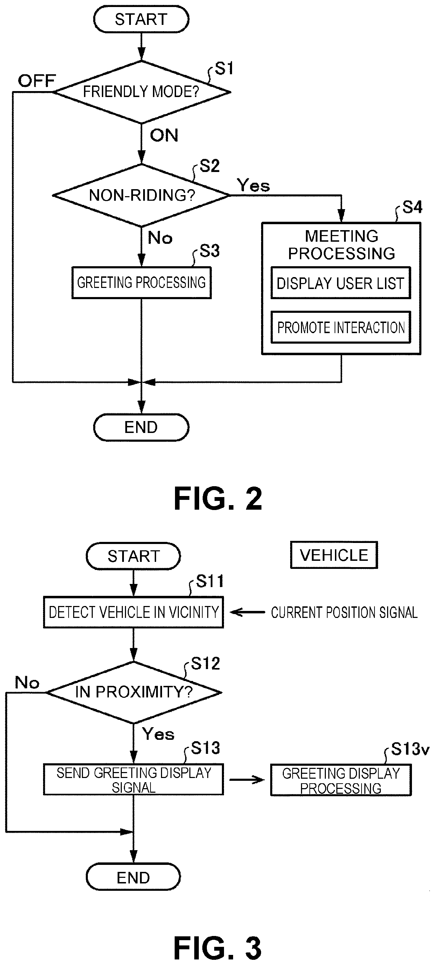

Next, association assistance processing in the present embodiment will be described with reference to FIGs. 2 to 8. FIG. 2 is a processing flow of the association assistance processing. The association assistance processing includes greeting processing which is performed while the user A is determined to be riding in the vehicle 1 (or while the user A is causing the vehicle 1 to travel), and meeting processing which is performed while the user A is determined to be not riding (while the user A is out of the vehicle 1). That is, the greeting processing is executed while the user A is driving the vehicle 1, and the meeting processing is executed while the user A is out of the vehicle 1 (for example, while the user A is strolling around a sightseeing spot in the middle of a drive). It should be noted that in the following description, the other vehicle 1B is a friendly vehicle in which the friendly mode flag is turned on.

In the greeting processing, when, during traveling of the vehicle 1, the vehicle 1 is in proximity to the other vehicle 1B within a predetermined distance (for example, when they pass each other), a greeting expression is displayed on the display device 14. In the meeting processing (user list display processing), a presence of the other user B in the vicinity is displayed on the portable terminal 20 of the user, and the user A selects the displayed other user B using the portable terminal 20, so that the user A can browse the profile information about the other user B using the portable terminal 20. Furthermore, in the meeting processing (interaction promotion processing), the user A can form a friendship with the other user B on the virtual space (Internet space) and also can meet the other user B in the vicinity of the current spot in the real space.

As illustrated in FIG. 2, the management apparatus 30 determines whether the friendly mode of the vehicle 1 of the user A is turned on (S1). That is, the management apparatus 30 determines whether the friendly mode flag of the user data of the vehicle 1 is turned on. When the friendly mode is turned on (Yes in S1) and the user A is riding in the vehicle 1 (No in S2), the management apparatus 30 executes the greeting processing (S3). On the other hand, when the friendly mode is turned on (Yes in S1) but the user A is not riding in the vehicle 1 (Yes in S2), the management apparatus 30 executes the meeting processing (S4).

The management apparatus 30 can perform the determination on whether the user A is riding in the vehicle 1 (S2), based on the IG state signal received from the vehicle 1. That is, the management apparatus 30, when determining that the IG signal of the vehicle 1 is off (the engine is stopped), determines that it is in a non-riding state in which the user A is not riding in the vehicle 1. Furthermore, alternatively, the management apparatus 30 may constantly receive position signals from the vehicle 1 and the portable terminal 20 and, when the current positions of the vehicle 1 and the portable terminal 20 differ by a predetermined distance (for example, 20 m) , determine that it is in the non-riding state. Furthermore, the management apparatus 30 may determine based on a state signal of a parking brake received from the vehicle 1 that, when the parking brake is on, it is in the non-riding state.

In the present embodiment, when it is determined during execution of the meeting processing that it is not in the non-riding state, the meeting processing is canceled, and the greeting processing is executed subsequently. For example, when the user A gets in the vehicle 1 and starts the engine again, the greeting processing is executed instead of the meeting processing.

Furthermore, the association assistance processing ends at the time when the drive ends. For example, update of the traveling log data is ended by turning off the friendly mode, and the association assistance processing is also ended thereby. Furthermore, alternatively, when return to the riding state is not made even after elapse of a predetermined time (for example, 6 hours) from the start of the meeting processing, or when the distance between the portable terminal 20 and the vehicle 1 is increased to a predetermined distance or more (for example, 1 km or more) during execution of the meeting processing, the management apparatus 30, assuming that the drive is ended, can end update of the traveling log data and also end the association assistance processing. The management apparatus 30 may constantly calculate the elapsed time of the meeting processing, or may calculate the elapsed time when the portable terminal 20 requests the management apparatus 30 for update of the user list display in response to an operation of the portable terminal 20 performed by the user A or automatically at predetermined time intervals.

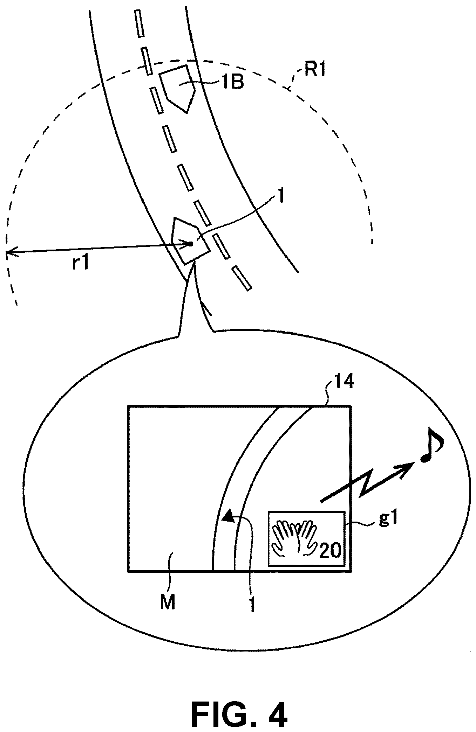

The greeting processing will be described with reference to FIGs. 3 and 4. FIG. 3 is a processing flow of the greeting processing, and FIG. 4 is an explanatory view of the greeting processing. When the greeting processing (S3 of FIG. 2) is started, the management apparatus 30 identifies the other vehicle 1B present in the vicinity of the vehicle 1, based on the position signal of the vehicle 1 (and the other vehicle 1B) periodically received from the vehicle 1 (S11). The management apparatus 30 determines whether the other vehicle 1B (see FIG. 4) has entered a predetermined first range R1 around the vehicle 1 (for example, a radius r1 = 20 m) (S12).

When the other vehicle 1B is not in proximity to the vehicle 1 (No in S12), the greeting processing ends. On the other hand, when the other vehicle 1B is in proximity to the vehicle 1 (Yes in S12), the management apparatus 30 sends a greeting display signal to the vehicle 1 (S13). The control apparatus 10 of the vehicle 1, when receiving the greeting display signal, calculates the number of trip greetings and executes processing for displaying a greeting expression g1 on the display device 14 (S13v). FIG. 4 illustrates the greeting expression g1 additionally displayed on a navigation screen displayed on the display device 14 of the vehicle 1 (the vehicle 1 is displayed on a map M). The user A recognizes the greeting expression g1 and feels that the user A was greeted by the user B of the other vehicle 1B. It should be noted that the management apparatus 30 executes the same processing in the other vehicle 1B, so that the vehicle 1 and the vehicle 1B exchange greetings with each other.

The number of trip greetings is the number of times of receiving the greeting display signal while the friendly mode is turned on for the current drive. The greeting expression g1 is, for example, a graphic expression indicating an action of the other user B waving his/her hand, and the number of trip greetings. The greeting expression g1 can include a predetermined sound expression which is generated from a speaker.

Furthermore, each time the greeting display signal is sent to the vehicle 1, the management apparatus 30 increases the number of greetings (corresponding to the number of trip greetings) in the traveling log data of the vehicle 1 by +1 for the update, and stores in the traveling log data the vehicle identification number (and/or the user identification number) of the other vehicle 1B in proximity to the vehicle 1. Furthermore, the management apparatus 30 calculates, separately from the number of greetings in the traveling log, the total number of greetings up to the present time, and stores it in the user data.

It should be noted that, alternatively, the management apparatus 30 may store, as the number of greetings in the traveling log data, the number of greetings received from the control apparatus 10 of the vehicle 1 at a predetermined time, and calculate the total number of greetings in the user data. In this case, when the IG signal becomes off or when the drive ends, the control apparatus 10 can send the number of trip greetings to the management apparatus 30. At this time, the management apparatus 30 may send, as drive information for this drive, the number of greetings (the number of trip greetings) and the total number of greetings to the portable terminal 20 of the user. The user A can confirm the number of greetings and the total number of greetings through the drive information displayed by the portable terminal 20.

Furthermore, alternatively, the management apparatus 30 may send the greeting display signal to the portable terminal 20 of the user A of the vehicle 1. In this case, the portable terminal 20 can display a greeting expression.

Furthermore, the management apparatus 30 may be configured so that, within a predetermined time (for example, within 1 hour) from when the greeting processing is executed by the vehicle 1 with respect to the vehicle 1B, the vehicle 1 does not execute the greeting processing with respect to the same vehicle 1B. In this case, the management apparatus 30, when determining that the other vehicle 1B is in proximity to the vehicle 1 (Yes in S12), further determines whether the other vehicle 1B was already a target of the greeting processing within the predetermined time. Then, when the other vehicle 1B was already a target of the greeting processing within the predetermined time, the management apparatus 30 does not send the greeting display signal to the vehicle 1. With this configuration, for example, when the vehicle 1B travels while following the vehicle 1, it is possible to prevent frequent execution of the greeting processing.

In the greeting processing, the user A, during driving of the vehicle 1, comes in proximity to or passes the vehicle 1B of the other user B, so that it is possible to automatically exchange greetings between the user A and the other user B. Accordingly, in the present embodiment, the user A can make greetings without revealing who he/she is, and since the greeting processing is performed automatically, the user A does not feel uneasiness at failure in greeting (that is, the user A does not receive any greeting reply from the user B to whom the user A sent a greeting).

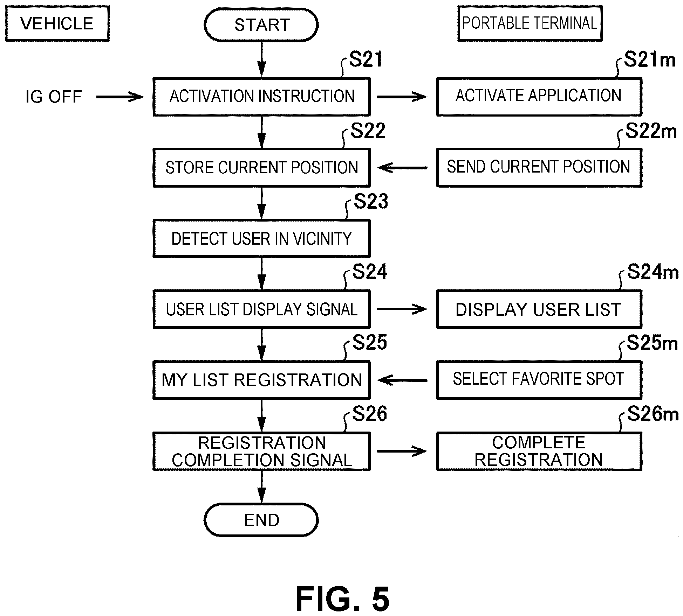

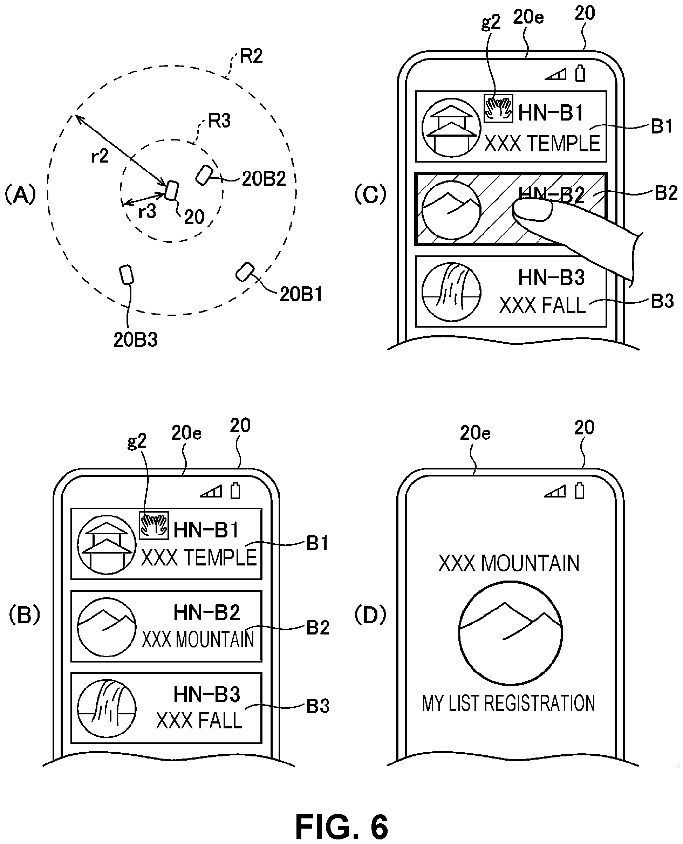

Next, the user list display processing executed in the meeting processing will be described with reference to FIGs. 5 and 6. FIG. 5 is a processing flow of the meeting processing (user list display processing), and FIG. 6 is an explanatory view of the user list display processing. The user list display processing is started in the meeting processing (S4 of FIG. 2) by an IG off operation in the vehicle 1. The management apparatus 30 identifies the portable terminal 20 of the user A of the vehicle 1 or the portable terminal 20 which has been linked to the vehicle 1, and sends to this portable terminal 20 an activation instruction signal for activating a friend formation application (S21). The portable terminal 20, when receiving the activation instruction signal, activates the friend formation application (S21m), and starts to repeatedly send to the management apparatus 30 a position signal indicating the current position (S22m). It should be noted that, alternatively, the portable terminal 20 may constantly send the position signal to the management apparatus 30, irrespective of the meeting processing.

The management apparatus 30, when receiving the position signal from the portable terminal 20, stores it in the traveling log data (S22). Similarly, the management apparatus 30 also constantly updates the current position of the portable terminal 20B of the user B of the other friendly vehicle 1B (which may be referred to as a "friendly portable terminal"). The management apparatus 30 detects one or a plurality of the other friendly portable terminals 20B present within a predetermined second range R2 around the portable terminal 20 (for example, a radius r2 = 500 m) (S23) and sends a user list display signal to the portable terminal 20 (S24). In an example of FIG. 6A, portable terminals 20B1, 20B2, and 20B3 of the other users B1, B2, and B3 around the portable terminal 20 of the user A are detected.

The user list display signal includes, regarding the user B of the detected friendly portable terminal 20B, the user identification number and the brief profile information. Thus, the management apparatus 30 extracts the user identification number and the brief profile information which are included in the user data of the user B of the detected other friendly portable terminal 20B, and generates the user list display signal. It should be noted that when the detected user B is the user in which the greeting processing has been performed in this drive (when the user identification number of the detected user B is stored in the traveling log data as the user identification number of the user with whom greetings have been exchanged), a greeting flag (additional signal) identifying the user with whom greetings have been exchanged may be added to the user list display signal.

The portable terminal 20 executes processing for displaying a list of the brief profile information about the other user B present in the vicinity of the user A, based on the received user list display signal (S24m). In an example of FIG. 6B, the brief profile information about the users B1, B2, and B3 (handles, and names and images of favorite spots) is displayed. Furthermore, the user B1 whose handle is "HN "B1" " is the user in which the greeting processing has been executed, and thus a predetermined greeting mark g2 is added to the user B1 based on the greeting flag. In the present embodiment, the greeting mark g2 is added to the user B1 in which the greeting processing has been executed, so that the user B1 is displayed in a different manner from the users B2 and B3 in which the greeting processing has not been executed. It should be noted that the different manner is not limited to a greeting mark and may be, for example, a different background color or addition of a different graphic expression.

The user A can refer to the brief profile information about the other user B displayed in the list and register a favorite spot of interest in the user A's My List information. Thus, the user A can select any of the other users B from the list display displayed on the portable terminal 20 (S25m). In an example of FIG. 6C, the user A selects the user B2. By the selection of the other user B2, a registration instruction signal is sent from the portable terminal 20 to the management apparatus 30. The registration instruction signal includes the user identification number of the selected user B2.

The management apparatus 30 additionally registers the favorite spot of the other user B2 in the user A's My List information based on the received registration instruction signal (S25) and sends a registration completion signal to the portable terminal 20 (S26). The other user B2 is identified by the user identification number included in the registration instruction signal. The portable terminal 20, when receiving the registration instruction signal, executes processing for displaying a registration completion display on the display device 20e (S26m). In an example of FIG. 6D, the registration completion display notifying that the favorite spot of the user B2 has been registered in the user A's My List information is indicated. The management apparatus 30 repeatedly performs the processing of steps S22 to S26 during execution of the user list display processing.

In the user list display processing, the user A, when out of the vehicle 1, can confirm the other user B in the vicinity from the list display using the portable terminal 20, and register in the My List information a favorite spot of interest from the brief profile information about the other user B. Therefore, in the present embodiment, the user A and the user B can reveal their own presence and a part of their information (favorite spots) while securing their own privacy from the users in the vicinity who have an intention to associate with them, and exert mutual action by passing their information (favorite spots) without failure. Thus, the user A can lower his/her psychological barrier to the user B, creating positiveness to form a friendship.

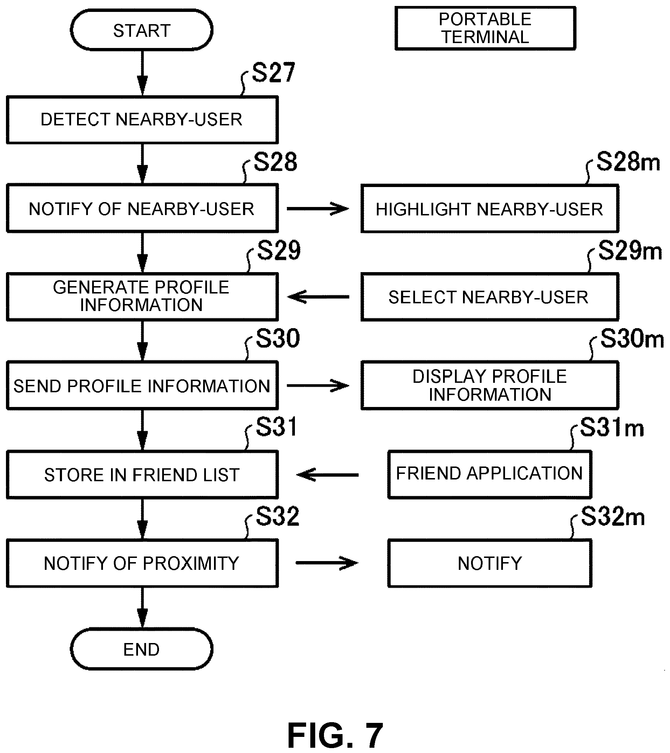

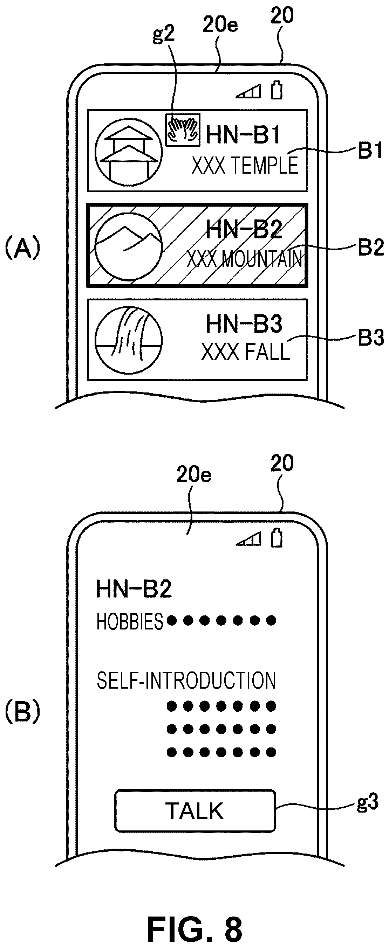

Next, the interaction promotion processing executed in the meeting processing will be described with reference to FIGs. 7 and 8. FIG. 7 is a processing flow of the meeting processing (interaction promotion processing), and FIG. 8 is an explanatory view of the interaction promotion processing. The interaction promotion processing is additionally executed as interrupt processing during execution of the user list display processing. That is, the interaction promotion processing is executed when the user A and the other user B are in proximity to each other within a third range R3. The third range R3 is set as a narrow range within the second range R2 so that the user A can visually recognize the other user B.

The management apparatus 30, when detecting that the other friendly portable terminal 20B2 possessed by the other user B2 is present within the predetermined third range R3 around the portable terminal 20 (see FIG. 6A, for example, a radius r3 = 10 m to 50 m) (S27), sets this user B2 as a nearby-user and sends a nearby-user notification signal to the portable terminal 20 (S28). The nearby-user notification signal includes the user identification number of the nearby-user B2 possessing the detected friendly portable terminal 20B2.

The portable terminal 20 identifies the nearby-user B2 from the other users B (B1, B2, and B3) displayed in the list (S24m) based on the user identification number of the received nearby-user notification signal and highlights the brief profile information about the identified nearby-user B2 (S28m). In FIG. 8A, the user B2 is highlighted as the nearby-user. The highlight is performed by differentiating the background color of the information display of the user B2 (in the case of FIG. 8A) or adding any mark.

The user A can select the highlighted user B2. When the user A selects the highlighted user B2, the portable terminal 20 sends a nearby-user selection signal to the management apparatus 30 (S29m). The management apparatus 30 generates a profile information signal in response to the received nearby-user selection signal (S29) and sends the profile information signal to the portable terminal 20 (profile information display processing in S30). The profile information signal includes the profile information about the nearby-user B2. Thus, the management apparatus 30 extracts the profile information from the user data of the nearby-user B2 based on the user identification number included in the received nearby-user selection signal.

The portable terminal 20 displays the profile information about the nearby-user B2 based on the received profile information signal (S30m). In FIG. 8B, the profile information about the user B2 is displayed. The displayed profile information includes hobbies, self-introduction, and diary information in addition to the brief profile information (the handle and favorite spot information).

The profile information is displayed on the portable terminal 20, and a friend application button g3 (a "talk" button) is displayed on the portable terminal 20 (see FIG. 8B). The user A selects the friend application button g3, so that the user A can form a friendship with the nearby-user B2 within the virtual space of the association assistance system S. When the user A selects the friend application button g3, the portable terminal 20 sends a friend application signal to the management apparatus 30 (S31m). The friend application signal includes the user identification number of the nearby-user B2.

The management apparatus 30 executes profile exchange processing (friendship establishment processing) in response to the received friend application signal (S31). In this processing, the management apparatus 30 acquires the profile information from the user data of the nearby-user B2 based on the friend application signal and stores in the Friend information of the user A the Friend identification number given to the nearby-user B2, the user identification number of the user B2, and the profile information about the user B2. Furthermore, at the same time, the Friend identification number given to the user A, the user identification number of the user A, and the profile information about the user A are stored in the Friend information of the nearby-user B2. Thus, a friendship is established between the user A and the other user B2 on the virtual space.

The user A accesses the Friend information of the user A using the portable terminal 20, so that the user A can further access the profile information about the other user B2 who is registered as a friend and browse the information. Furthermore, the profile information about the user B2 who is a friend may be linked to the Friend information. In this case, the user A accesses the his/her Friend information, so that the user A can access the linked profile information about the other user B2. The user A browses again the profile information about the other user B2 who is a friend, for example, after the drive, so that the user A can acquire new knowledge and stimulation and obtain motivations to a further drive and friend formation.

After the profile exchange processing, the management apparatus 30 may send to the user A and the user B2 a friend establishment signal notifying that a friendship is established. In response to this signal, each of the portable terminals 20 and 20B2 can display establishment of the friendship.

It should be noted that the management apparatus 30 may refer to the profile exchange approval setting included in the user data of the other user B2 who is a target of the friend application signal. In this case, if the profile exchange approval setting of the other user B2 is set to automatically approve a friend application, the profile exchange processing is performed, but in the case of a setting of refusing a friend application, the profile exchange processing is not performed.

Furthermore, alternatively, the management apparatus 30 may send a friend application notification signal to the user B2 in response to the friend application signal received from the user A. In this case, the portable terminal 20B2 of the user B2 displays an agreement button for agreeing to a friend application from the user A and a refusal button for refusing this application. Then, when the user B2 selects the agreement button, the portable terminal 20B2 sends a friend application agreement signal to the management apparatus 30, and in response to this signal, the management apparatus 30 executes the profile exchange processing between the user A and the user B2 to establish a friendship on the virtual space. On the other hand, when the user B2 selects the refusal button, the portable terminal 20B2 sends a friend application refusal signal to the management apparatus 30, and in response to this signal, the management apparatus 30 does not execute the profile exchange processing.

Furthermore, when a friendship is mutually established, the management apparatus 30 executes proximity notification processing for sending a notification signal to the portable terminal 20 (and the portable terminal 20B2 of the other user) according to a distance between the portable terminal 20 of the user A and the portable terminal of the other user B2 (S32). The portable terminal 20 (and the portable terminal 20B2 of the other user B2) notifies by generating sound or vibration that the two are in proximity to each other, based on the received notification signal (S32m). For example, the portable terminal 20 operates to generate a big sound as the distance to the other portable terminal 20B2 is short. Thus, it becomes easier for the user A to identify the other user B2 in the real space and meet and talk to the other user B2.

Furthermore, alternatively, a peer-to-peer (P2P) mutual direct wireless connection may be established between the portable terminal 20 of the user A and the portable terminal 20B2 of the other user B2 which are in a nearby state, without depending on networks, to execute the proximity notification processing. Thus, for example, Wi-Fi Aware (registered trademark) can be used. In this case, a P2P communication is established between the portable terminal 20 and the portable terminal 20B2, so that a distance therebetween can be estimated according to received radio wave intensity. The portable terminal 20 and the portable terminal 20B2 can generate sound or vibration according to the estimated distance.

In the interaction promotion processing, in the situation where the user A is out of the vehicle 1 and in proximity to the other user B, the user A can browse the profile information about the other user B using the portable terminal 20, and when the user A gets interested in the other user B through this browsing, the user A can become a friend with the other user B on the virtual space through profile exchange and meet the other user B on the real space by the notification processing. Accordingly, in the present embodiment, the user A has a possibility of failure with respect to the other user B based on positiveness created so far but can identify himself/herself on the virtual space and the real space and perform actions to become a friend.

It should be noted that in the present embodiment, the embodiment in which the moving object is a vehicle such as a car has been described, the moving object is not limited to a vehicle being a car but includes a bus, a motorbike, a motor scooter, a vessel, or an aircraft.

Next, an operation of the system of the present embodiment will be described.

The present embodiment discloses an association assistance apparatus (management apparatus 30) for, using a plurality of the moving objects (vehicles 1 and 1B) of a plurality of the users A and B and a plurality of the portable terminals 20 and 20B of the plurality of users A and B, assisting association of the plurality of users based on the position signals received from the plurality of moving objects and the plurality of portable terminals. The management apparatus 30 is configured to, when receiving from the moving object 1 the friendly mode signal indicating that the user A of this moving object 1 has an intention to become a friend with the user B of the other moving object 1B, execute the friendly mode setting processing for setting the moving object 1 which has sent the friendly mode signal as the friendly moving object; when the other friendly moving object 1B enters the first range R1 around the friendly moving object (Yes in S12), execute the greeting processing (S13; S3) for sending to at least the friendly moving object 1 or the portable terminal 20 of the user A of the friendly moving object 1 the greeting display signal for displaying the greeting expression g1; and execute the user list display processing (S24; S4) for detecting the portable terminal 20B of the user B of the other friendly moving object 1B present within the second range R2 around the portable terminal 20 of the user A of the friendly moving object 1 (S23), and sending to the portable terminal 20 of the user A of the friendly moving object 1 the user list display signal for displaying, of the profile information about the user B of the detected other friendly moving object 1B, only the brief profile information, wherein the user list display processing (S4) is executed during a period determined to be in the non-riding state in which the user A of the friendly moving object 1 is out of the friendly moving object 1 (Yes in S2) .

In the present embodiment configured as described above, the user A, when riding in the moving object 1, and out of the moving object 1, can exert mutual action with the other user who has an intention to become a friend. Furthermore, in the present embodiment, it is possible to gradually lower the user A's psychological barrier to the other user B from during riding toward during non-riding. Specifically, during riding, greetings are automatically exchanged between the moving object 1 and the other moving object 1B in response to proximity therebetween. Through such automatic greetings, the user A becomes aware that the other user who wishes to have interaction is present in the vicinity, so that the user A can lower his/her psychological barrier to exerting further mutual action with the other user B. Furthermore, during non-riding, it is possible to individually identify the presence of the other user B in the vicinity via the portable terminal 20 using the user list display and notify the user A of the fact. Thus, in the present embodiment, during non-riding, the user A knows the presence of the identified other user B and the information about the identified other user B, so that the user A can further lower his/her psychological barrier to the other user B, creating positiveness to form a friendship with the other user B. Therefore, in the present embodiment, it is possible to promote formation of a relationship of association between the users A and B of the moving objects 1 and 1B.

Furthermore, in the present embodiment, the user list display processing is executed during stopping of the friendly moving object 1, so that it is possible to prevent the user A from operating the portable terminal 20 during traveling, and guide the user A to the outside of the friendly moving object 1 during stopping to promote interaction with the other user B.

Furthermore, in the present embodiment, preferably, in the user list display processing, when the portable terminal 20B of the user B of the other friendly moving object 1B is detected within the third range R3 narrower than the second range R2 (S27), executed is the processing (S28) for sending to the portable terminal 20 of the user A of the friendly moving object 1 the nearby-user notification signal for highlighting the brief profile information about the user B of the other friendly moving object 1B. Thus, in the present embodiment, the user A can know that the user A is further in proximity to the other user B via the portable terminal 20.

Furthermore, in the present embodiment, preferably, it is configured to, in the user list display processing, when receiving from the portable terminal 20 of the user A of the friendly moving object 1 the nearby-user selection signal identifying the user B of the other friendly moving object 1B, further execute the profile information display processing for sending to the portable terminal 20 of the user A of the friendly moving object 1 the profile information signal for displaying the profile information about the user B of the other friendly moving object 1B. Thus, in the present embodiment, the user A can view the profile information about the other user B in the portable terminal 20. The user A knows more specific information about the other user B, so that the user A can develop a sense of affinity to the user B and prepare topics when having a conversation with the user B, further creating positiveness to form a friendship with the user B.

Furthermore, in the present embodiment, preferably, it is configured to, in the user list display processing, when receiving from the portable terminal 20 of the user A of the friendly moving object 1 the friend application signal for performing a friend application with respect to the user B of the other friendly moving object 1B, further execute the friendship establishment processing (S31) for enabling access of the portable terminal 20 of the user A of the friendly moving object 1 to the profile information about the user B of the other friendly moving object 1B. Thus, in the present embodiment, the user A becomes a friend with the other user B on the virtual space and can freely browse the profile information about the other user B from the portable terminal 20.

Furthermore, in the present embodiment, preferably, it is configured to, in the user list display processing, further execute the proximity notification processing (S32) for sending to the portable terminal 20 of the user A of the friendly moving object 1 the notification signal for notifying of proximity of the portable terminal 20B of the user B of the other friendly moving object 1B according to a distance between the portable terminal 20 of the user A of the friendly moving object 1 and the portable terminal 20B of the user B of the other friendly moving object 1B. Thus, in the present embodiment, the user A can meet the other user B in the real space with the aid of the notification using the portable terminal 20.

Furthermore, in the present embodiment, preferably, it is configured to, in the user list display processing, send to the portable terminal 20 of the user A of the friendly moving object 1 the additional signal for displaying, of the users B of the detected other friendly moving objects 1B, the user B1 of the friendly moving object which is a target of the greeting processing (see FIG. 6B), in a different manner (greeting mark g2) from the users B2 and B3 of the friendly moving objects which are not targets of the greeting processing. Thus, in the present embodiment, it is possible to encourage the user A to develop a sense of affinity to the other user B1 with whom a greeting has already been made.

Furthermore, in the present embodiment, preferably, the period determined to be in the non-riding state is a period in which a power source of the friendly moving object 1 is stopped (IG off period), a period in which the portable terminal 20 of the user A of the friendly moving object 1 is away from the friendly moving object 1 by a predetermined distance, or a period in which the parking brake of the friendly moving object 1 is turned on.

Furthermore, in the present embodiment, preferably, provided is the memory 30b that stores the profile information about the plurality of users A and B.

### [Reference Signs List]

- 1: vehicle (moving object)
- 1B: other vehicle (other moving object)
- 3: management center
- 10: control apparatus
- 20: portable terminal
- 20B: other portable terminal
- 30: management apparatus
- A: user
- B, B1, B2, B3: other user
- S: association assistance system

## Claims

1. An association assistance apparatus (30) for, using a plurality of moving objects (1, 1B) of a plurality of users and a plurality of portable terminals (20, 20B) of the plurality of users, assisting association of the plurality of users based on position signals received from the plurality of moving objects (1, 1B) and the plurality of portable terminals (20, 20B), the association assistance apparatus (30) being configured to:
when receiving from the moving object (1) a friendly mode signal indicating that a user (A) of the moving object (1) has an intention to become a friend with a user (B) of another moving object (1B), execute friendly mode setting processing for setting the moving object (1) which has sent the friendly mode signal as a friendly moving object;
when another friendly moving object (1B) enters a first range (R1) around the friendly moving object (1), execute greeting processing for sending to at least the friendly moving object (1) or a portable terminal (20) of the user (A) of the friendly moving object (1) a greeting display signal for displaying a greeting expression (g1); and
execute user list display processing (S4) for detecting a portable terminal (20B) of a user (B) of another friendly moving object (1B) present within a second range (r2) around the portable terminal (20) of the user (A) of the friendly moving object (1), and sending to the portable terminal (20) of the user (A) of the friendly moving object (1) a user list display signal for displaying, of profile information about the user (B) of the detected other friendly moving object (1B), only brief profile information,
wherein the user list display processing (S4) is executed during a period determined to be in a non-riding state in which the user (A) of the friendly moving object (1) is out of the friendly moving object (1).

2. The association assistance apparatus (30) according to claim 1, wherein in the user list display processing (S4), when the portable terminal (20B) of the user (B) of the other friendly moving object (1B) is detected within a third range (r3) narrower than the second range (r2), the association assistance apparatus (30) executes processing for sending to the portable terminal (20) of the user (A) of the friendly moving object (1) a nearby-user notification signal for highlighting the brief profile information about the user (B) of the other friendly moving object (1).

3. The association assistance apparatus (30) according to claim 2, being configured such that highlighting is performed by differentiating the background color of the information display of the user (B2) of the other friendly moving object (1) or adding a mark.

4. The association assistance apparatus (30) according to any of claims 1 to 3, wherein the association assistance apparatus (30) is configured to, in the user list display processing (S4), when receiving from the portable terminal (20) of the user (A) of the friendly moving object (1) a nearby-user selection signal identifying the user (B) of the other friendly moving object (1), further execute profile information display processing for sending to the portable terminal (20) of the user (A) of the friendly moving object (1) a profile information signal for displaying the profile information about the user (B) of the other friendly moving object (1B).

5. The association assistance apparatus (30) according to any of claims 1 to 4, wherein the association assistance apparatus (30) is configured to, in the user list display processing (S4), when receiving from the portable terminal (20) of the user (A) of the friendly moving object a friend application signal for performing a friend application with respect to the user (B) of the other friendly moving object (1B), further execute friendship establishment processing (S31) for enabling access of the portable terminal (20) of the user (A) of the friendly moving object (1) to the profile information about the user (B) of the other friendly moving object(1B).

6. The association assistance apparatus (30) according to claim 5, being configured to refer to a profile exchange approval setting included in user data of another user (B2) who is a target of the friend application signal,
wherein preferably the association assistance apparatus (30) is configured such that, in the case, if the profile exchange approval setting of the other user (B2) is set to automatically approve a friend application, the friendship establishment processing is performed, and in the case the profile exchange approval setting of the other user (B2) is set to refuse a friend application, the friendship establishment processing is not performed.

7. The association assistance apparatus (30) according to any of claims 1 to 6, wherein the association assistance apparatus (30) is configured to, in the user list display processing (S4), further execute proximity notification processing (S32) for sending to the portable terminal (20) of the user (A) of the friendly moving object (1) a notification signal for notifying of proximity of the portable terminal (20B) of the user (B) of the other friendly moving object (1B) according to a distance between the portable terminal (20) of the user (A) of the friendly moving object (1) and the portable terminal (20B) of the user (B) of the other friendly moving object (1B).

8. The association assistance apparatus (30) according to claim 7, being configured such that the portable terminal (20) of the user (A) notifies by generating sound or vibration that the portable terminal (20) of the user (A) and the portable terminal (20B2) of another user (B) are in proximity to each other, based on the received notification signal; and/or
wherein the association assistance apparatus(30) is configured such that the portable terminal (20) of the user (A) operates to generate a big sound as a distance to the portable terminal (20B2) of the other user (B) is short.

9. The association assistance apparatus (30) according to any preceding claim, configured such that a peer-to-peer mutual direct wireless connection is established between the portable terminal (20) of the user (A) and the portable terminal (20B2) of the other user (B2) which are in a nearby state, to execute proximity notification processing (S32) .

10. The association assistance apparatus (30) according to any of claims 1 to 9, wherein the association assistance apparatus (30) is configured to, in the user list display processing (S4), send to the portable terminal (20) of the user (A) of the friendly moving object (A) an additional signal for displaying, of users (B) of detected other friendly moving objects (1B), a user (B1) of a friendly moving object which is a target of the greeting processing, in a different manner (g2) from a user (B2, B3) of a friendly moving object which is not a target of the greeting processing.

11. The association assistance apparatus (30) according to claim 10, configured to add a greeting mark (g2) to a user (B1) in which the greeting processing has been executed, and/or wherein the different manner is a different background color or addition of a different graphic expression.

12. The association assistance apparatus (30) according to any of claims 1 to 11, wherein the period determined to be in the non-riding state is a period in which a power source of the friendly moving object (1) is stopped, a period in which the portable terminal (20) of the user (A) of the friendly moving object (1) is away from the friendly moving object (1) by a predetermined distance, or a period in which a parking brake of the friendly moving object (1) is turned on.

13. The association assistance apparatus (30) according to any of claims 1 to 12, comprising a memory (30b) that stores the profile information about the plurality of users (A, B) .

14. The association assistance apparatus (30) according to any preceding claim, being configured such that:
within a predetermined time from when the greeting processing is executed by the friendly moving object (1) with respect to the other friendly moving object (1B), the friendly moving object (1) does not execute the greeting processing with respect to the other friendly moving object (1B) .

15. An association assistance system (S) including:
an association assistance apparatus (30) according to any preceding claim; and
a moving object (1);
wherein preferably the moving object (1) is a vehicle (1), in particular a car, a bus, a motorbike, a motor scooter, a vessel, or an aircraft.
